# EUROPEAN PATENT SPECIFICATION

(11) **EP 1 304 458 B1**
(45) Date of publication and mention of the grant of the patent: **10.08.2005**
(21) Application number: 01124859.8
(22) Date of filing: 18.10.2001
(51) Int. Cl.: F01N 9/00, F01N 3/023

(54) **Method for regeneration of the exhaust filter of an internal combustion engine**
Verfahren zur Regenerierung des Abgaspartikelfilters einer Brennkraftmaschine
Procédé de régénération de filtre d'échappement d'un moteur à combustion interne

(43) Date of publication of application: 23.04.2003
(73) Proprietor: Ford Global Technologies, LLC, Dearborn, MI 48126 (US)
(72) Inventor: Yacoub, Yasser Mohamed Sayed, Junkersdorf, 50858 Köln (DE); Christen, Urs, 52072 Aachen (DE); Moraal, Paul Eduard, 6291 VP Vaals (NL)
(74) Representative: Drömer, Hans-Carsten, Dipl.-Ing.

(56) References cited:
- DE-A- 19 504 184
- DE-A- 19 932 301
- US-A- 4 698 966
- US-A- 4 974 414

## Description

The present invention relates to a method for regeneration of an exhaust filter located in the exhaust pipe of an internal combustion engine, comprising the step of raising the temperature of the exhaust gas above a given temperature threshold if conditions indicating the need for a filter regeneration are met. Moreover, the invention relates to a system for regeneration of an exhaust filter located in the exhaust pipe of an internal combustion engine comprising means to determine conditions indicating the need for a filter regeneration and means to raise the temperature of the exhaust gas.

Exhaust filters are used in the exhaust systems of internal combustion engines to reduce noxious emissions of the engine. Diesel particulate filters (DPF) are used for example in diesel engines to trap and remove diesel particulate matter which is primarily formed of carbon based material. As the engine exhaust passes through the DPF, the particulates are trapped in the filter and accumulate over time. This leads to an increase in the resistance of the exhaust gas flow through the DPF, and therefore to an increase in the backpressure on the engine. This increase in backpressure has an adverse effect on engine operation and especially on fuel consumption. In order to reduce backpressure to acceptable levels, the DPF is periodically regenerated by burning off the accumulated particulates, most of which are combustible. Also, the amount of trapped particulate mass must be kept below a critical threshold so as to avoid thermal damage to the filter during regeneration.

Several methods and devices have been developed in order to determine the correct point in time for the regeneration of an exhaust filter. Many of these try to estimate the load of the particulate filter, e.g. by measurement and comparison of the pressures before and after the filter (cf. JP 8326523 A).

Moreover, different methods to raise the temperature of the exhaust gas to the required level for regeneration are known. Among these are methods that increase engine load by switching on electrical loads or by the decreasing of manifold pressure. For more details see EP 10 81 347 A1 (*198-1101*).

An inherent drawback of all known methods of forced regeneration by increase of exhaust gas temperature is the associated additional fuel consumption.

In the US 4 974 414 a system with a diesel particulate filter is disclosed for which a purification process is initiated if particle load increases above a predetermined threshold. If a controller initiates a regeneration process due to the load conditions, the start of this process may be suppressed if the exhaust gas temperature in front of the filter is below a predetermined threshold.

DE 195 04 184 A1 relates to the regeneration of a diesel particulate filter, too. If temperature behind the filter increases above a predetermined threshold, the regeneration process may be advanced.

It is therefore an object of the present invention to provide a method and a device for the regeneration of an exhaust filter that achieve a better fuel efficiency.

This objective is achieved by a method according to claim 1 and a system according to claim 5. Preferred embodiments of the invention are disclosed in the dependent claims.

The proposed method for the regeneration of an exhaust filter located in the exhaust pipe of an internal combustion engine comprises the step of rising the temperature of the exhaust gas above a given temperature threshold if conditions indicating the need for a filter regeneration are met. The method is characterised in that the rising of the temperature is initiated in advance if the actual temperature of the exhaust gas is higher than normal and/or if it is increasing. The reference value of a "normal" temperature has to be defined appropriately, e.g. as the average temperature at mediate or low engine load.

According to the proposed procedure, the regeneration is initiated earlier if the actual temperature is already higher than the temperature that can normally be expected at the initiation of a regeneration cycle. Thus, the available high temperature is exploited and fuel can be saved. Moreover, the difference between the modes of operation with and without regeneration will be smaller, and therefore the regeneration will have a smaller impact on drivability of the vehicle.

Preferably there will be a mutual dependence between the temperature of the exhaust gas and the degree to which the condition for regeneration is fulfilled, i.e. the higher the temperature the weaker the condition may be and vice versa.

Alternatively or additionally to the mere temperature value of the exhaust gas, the direction of change of the temperature may be evaluated. I.e. if temperature raises, regeneration may be advanced more, and if temperature decreases, regeneration may be advanced less. This procedure takes into account the temperature development and the temperature that can be expected during the regeneration cycle.

According to a second aspect of the invention, a method for the regeneration of an exhaust filter located in the exhaust pipe of an internal combustion engine is provided that comprises the step of raising the temperature of the exhaust gas above a given temperature threshold if conditions indicating the need for a filter regeneration are met. The method is characterised in that the raising of the temperature is initiated with delay if the actual temperature of the exhaust gas is lower than normal and/or if it is decreasing. The reference point of a "normal" temperature has again to be defined appropriately, e.g. as the average temperature at medium or low engine load.

The second method achieves the same advantages as the first, but in a complementary way. Instead of exploiting an advantageous high temperature of the exhaust gas, the second method avoids a disadvantageous low temperature of the exhaust gas as the starting point of a regeneration process. Thus fuel can be saved that would normally be necessary to increase the temperature from its actual low level to the normal level. Moreover, the delay of the regeneration avoids an extremely large change in the operation mode of the engine which may have a negative impact on drivability.

Preferably there will be a mutual dependence between the temperature of the exhaust gas and the degree to which the condition for regeneration is fulfilled, i.e. the lower the temperature the more the condition must be fulfilled in order to initiate regeneration and vice versa.

Alternatively or additionally to the mere temperature value of the exhaust gas, the direction of change of the temperature may be exploited. I.e. if temperature decreases, regeneration may be delayed more, and if temperature raises, regeneration may be delayed less. This takes into account the temperature development and the temperature that can be expected during the regeneration cycle.

Preferably the two methods explained above are combined. This means that at a temperature above a normal level regeneration is advanced, while at a temperature below a normal level regeneration is delayed. No change in the timing of the regeneration is made at the normal temperature level itself. Besides this, the direction and magnitude of change of the actual temperature of the exhaust gas can be observed, i.e. the advancement of regeneration can be increased or its delay can be reduced if temperature raises, and the advancement of regeneration can be reduced or its delay can be increased if temperature falls.

There are many different ways to determine the point in time when the regeneration of an exhaust filter becomes necessary. In the simplest case, regeneration may be initiated periodically after a certain time interval has elapsed. According to a preferred embodiment of the invention, the condition indicating the need for a filter regeneration is defined by the pressure difference across the exhaust filter, i.e. the backpressure due to the clogging of the filter. Such a pressure drop can readily be determined and yields a quantifiable indication of filter load.

Alternatively, the condition indicating the need for a filter regeneration may be defined by the estimated load of the exhaust filter. This load may be calculated or estimated with the help of procedures that rely on the observation of different engine parameters and that are well known in the art.

The decision to initiate the raising of the temperature of the exhaust gas in order to start regeneration is preferably taken with the help of fuzzy logic calculations. Fuzzy logic is a mathematical framework for the implementation of verbal rules that are based on unsharp or fuzzy statements like "the temperature is high" or "the need for a regeneration process is low". Fuzzy logic quantifies these statements with the help of membership functions that assign values between 0 and 1 to these statements according their degree of fulfilment. After such a quantification, fuzzy logic allows to calculate with the statements and to evaluate complex expressions such as "the higher the actual temperature, the more should regeneration be advanced".

Alternatively, it may be implemented (in crisp logic) with the help of three lookup tables. The exhaust gas temperature, its derivative and the filter load can be translated into signals between 0 and 1. For instance, the temperature could be translated as: 0 below 200°C, a ramp from 0 to 1 between 200°C and 500°C, and 1 above 500°C. The outputs of these lookup tables are then seemed and if the seem exceeds, the value of 1 regeneration is started.

The present invention also comprises a system for the regeneration of an exhaust filter located in the exhaust pipe of an internal combustion engine, the system comprising:
- means to determine conditions that indicate the need for a filter regeneration;
- means to raise the temperature of the exhaust gas in order to initiate and execute a regeneration process in the filter;
- means to determine the actual temperature of the exhaust gas; and
- a controller adapted to execute a method as described above.

The controller of the system is communicatively coupled to said different means and collects information about the actual temperature of the exhaust gas and the need for a regeneration process. It can initiate a regeneration by commanding a raise in temperature of the exhaust gas. The controller decides to start a regeneration process in accordance with the principles of the methods mentioned above, i.e. it advances such a start if temperature of the exhaust gas is already high and/or increasing, and/or the controller delays such a start if temperature of the exhaust gas is presently low and/or decreasing. In this way, the proposed system achieves considerable fuel savings.

The internal combustion engine of the system is preferably a diesel engine, while the exhaust filter is a diesel particulate filter (DPF). A DPF has to be regenerated or purified from time to time which is done by burning the collected combustible particles, the combustion being initiated by an increase in exhaust gas temperature.

The means to determine conditions indicating the need for a filter regeneration may comprise pressure sensors located upstream and downstream of the exhaust filter. In this way two relatively simple sensors suffice to provide a quantifiable indication of filter load based on the pressure difference across the exhaust filter, i.e. the backpressure due to the clogging of the filter.

The means to determine the actual temperature of the exhaust gas may comprise a temperature sensor located in the exhaust pipe of the internal combustion engine, preferably upstream or downstream near the exhaust filter. In many cases, such a sensor will already be available for other purposes of engine control.

The controller of the system is preferable a programmable microprocessor. A microprocessor allows the flexible implementation of a control strategy as its behaviour is primarily determined by the software. Moreover, the microprocessor may be charged with other control tasks, too. The microprocessor may also be the engine control unit (ECU) that controls the whole engine behaviour.

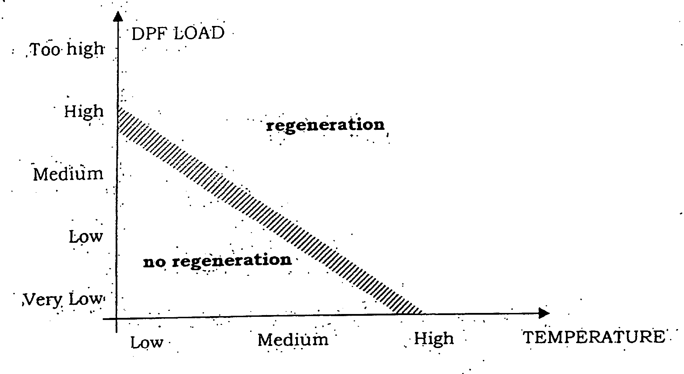

In the following, a preferred embodiment of the invention will be described with reference to the accompanying drawing. The only figure shows the parameter regions corresponding to the decisions to regenerate or not according to the present invention.

As an example, a diesel engine with a diesel particulate filter (DPF) is considered, though the present invention is not restricted to such cases. A DPF collects the soot emitted from a diesel engine. As a result of the carbon build-up in the filter, the backpressure raises over time. The filter needs to be regenerated from time to time, i.e. particulate mass needs to be oxidised in order to keep the fuel economy penalty associated with increased backpressure to a minimum Also, the amount of trapped particulate mass must be kept below a critical threshold so as to avoid thermal damage to the filter during regeneration. On the other hand, forcing a regeneration, i.e. increasing exhaust gas temperature beyond normal operating temperatures, imposes a fuel economy penalty as well. Therefore, the point at which a regeneration is to be forced should be chosen judiciously.

The system proposed here consists of an engine fitted with a particulate filter, and the engine control unit (ECU) containing the control strategy for the engine. Part of this control strategy is a DPF load estimation algorithm which monitors the degree to which the DPF has filled with particulate matter. There are different possibilities for the implementation of such an algorithm. According to one such algorithm, the flow through the DPF is modelled with a valve equation or with another similar equation in which the effective area depends on the DPF load. The load therefore can be reconstructed by manipulation of this equation. This method offers the advantage that the signal describing the state of the DPF is independent of the engine operating condition. The required sensors can be reduced to two by reconstructing the signals from existing signals and first principles.

In another method for determining the load of a diesel engine exhaust particulate filter the portion of the filter load constituted by accumulated ash is determined. In one technique, the ash load is determined by recording the lowest value of DPF load over a time interval. In another technique, an estimate is made of the amount of load remaining at each of a plurality of DPF regeneration events; the amount of remaining load immediately following the regeneration event corresponds to the amount of accumulated ash in the DPF. DPF load estimation is performed using equations for laminar or turbulent flow in pipes. These equations establish a linear or quadratic relationship between the flow through the DPF and the pressure drop measured across it. Instead of considering the estimated DPF load, other quantities equally indicative of the degree of clogging of the filter could be used, such as normalised backpressure, filter effective flow area, etc.

Different strategies may be used to initiate the regeneration by increasing exhaust gas temperature. One such strategy includes the step of calculating a target engine operational parameter (target intake manifold pressure, target intake manifold mass air flow, or target air/fuel ratio) as a function of engine speed and load. The strategy further includes the step of calculating a commanded position for a throttle valve disposed in the intake manifold of the engine. The commanded position is calculated responsive to the target engine operational parameter and a measured engine operational parameter, which is one of the following parameters: a measured intake manifold pressure, a measured intake manifold mass air flow, or a measured air/fuel ratio. The strategy further inclues the step of controlling the throttle valve responsive to the commanded position to control the exhaust gas temperature of the engine, and the step of setting a commanded engine speed to a predetermined speed to further control the exhaust gas temperature. Finally, the strategy includes the step of injecting a predetermined amount of fuel into one of the cylinders of the engine late in a power stroke of the one or more cylinders to further control the exhaust gas temperature.

Another part of the present invention is the improved algorithm for determining when to initiate a forced filter regeneration. Usually, one would define a threshold for the DPF load and initiate (force) a regeneration when the estimated particulate mass in the filter exceeds a certain number of grams per litre of filter volume. What is proposed instead is to make this threshold a function of current engine operating conditions, in particular, a function of exhaust gas temperature. If the exhaust gas temperature is already fairly close to the point at which a regeneration could occur, then it would be appropriate to increase the exhaust gas temperature slightly in order to initiate a regeneration, even if the filter is only partially loaded. If the filter is only partially loaded and the exhaust gas temperature, is rather low, then nothing should be done.

On the other hand, if the filter is loaded to a critical level, the regeneration should be initiated regardless of current exhaust gas temperatures.

Finally, in the "grey area" in between, the regeneration could be initiated if the exhaust temperature is close to the threshold and increasing.

Using terminology of fuzzy logic, the "dynamic threshold strategy" could be described by the diagram of the accompanying figure as follows.

The temperature levels "low", "medium", and "high" in this diagram are defined relative to the temperature needed for regeneration. The assignment of a given actual temperature to the different levels is done with appropriately chosen fuzzy logic membership functions. The DPF load intervals "very low", "low", "medium", "high", and "too high" are defined relative to the critical loading level. The assignment of a given load condition to the different levels is again done with appropriately chosen fuzzy logic membership functions.

Next, fuzzy rules like
"IF the actual temperature is low AND the DPF load is medium, THEN do not force regeneration"
are evaluated on the basis of the actual data for temperature and DPF load. This mainly leads to the depicted division of the parameter space along the hatched diagonal, the diagram having an upper area, where regeneration is initiated, and a lower area, where regeneration is not forced. On the hatched stripe that divides the upper from the lower area, the decision to start regeneration or not depends on the direction of change of the actual temperature. Namely, if temperature raises in this area, regeneration will be initiated, and if temperature falls in this area, regeneration will be delayed.

Again, it should be made clear that the strategy can be implemented in crisp logic as well, as described on page 6.

## Claims

1. A method for the regeneration of an exhaust filter located in the exhaust pipe of an internal combustion engine, comprising the step of rising the temperature of the exhaust gas above a given temperature threshold if conditions indicating the need for a filter regeneration are met, wherein
a) the rising of the temperature is initiated according only to said conditions if the actual temperature of the exhaust gas corresponds to a predetermined temperature called "normal";
b) if the actual temperature of the exhaust gas is higher than normal and/or increasing, the rising of the temperature is initiated in advance by applying a weaker condition for regeneration;
c) if the actual temperature of the exhaust gas is lower than normal and/or falling the rising of the temperature is initiated delayed by applying a stronger condition for regeneration.

2. The method according to claim 1, wherein the conditions indicating the need for a filter regeneration are defined by the pressure difference across the exhaust filter.

3. The method according to claims 1 or 2, wherein the conditions indicating the need fora filter regeneration are defined by the estimated load of the exhaust filter.

4. The method according to one of claims 1 to 3 wherein the decision to initiate the raising of the temperature of the exhaust gas is taken with the help of fuzzy logic calculations based on membership functions for the condition indicating the need for a filter regeneration and for the actual temperature of the exhaust gas.

5. A system for the regeneration of an exhaust filter located In the exhaust pipe of an internal combustion engine, comprising
a) means to determine conditions indicating the need for a filter regeneration;
b) means to raise the temperature of the exhaust gas;
c) means to determine the actual temperature of the exhaust gas; and
d) a controller adapted to execute a method according to one of claims 1 to 4.

6. The system according to claim 5, wherein the internal combustion engine is a diesel engine and the exhaust filter is a diesel particulate filter.

7. The system according to claims 5 or 6, wherein the means to determine conditions indicating the need for a filter regeneration comprise pressure sensors located upstream and downstream of the exhaust filter.

8. The system according to one of claims 5 to 7, wherein the means to determine the actual temperature of the exhaust gas comprise a temperature sensor located in the exhaust pipe of the internal combustion engine.

9. The system according to one of claims 5 to 8, wherein the controller is a programmable microprocessor.

## Patentansprüche

1. Verfahren zur Regeneration eines im Abgasrohr eines Verbrennungsmotors angeordneten Abgasfilters, mit dem Schritt des Erhöhens der Temperatur des Abgases über eine gegebene Temperaturschwelle, wenn Bedingungen, die den Bedarf an einer Filterregeneration anzeigen, erfüllt werden, wobei:
a) das Erhöhen der Temperatur nur gemäß den Bedingungen eingeleitet wird, wenn die Isttemperatur des Abgases einer als "normal" bezeichneten vorbestimmten Temperatur entspricht;
b) wenn die Isttemperatur des Abgases höher ist als die Normaltemperatur und/oder ansteigt, das Erhöhen der Temperatur im Voraus durch Anwenden eines geringeren Bedingungsgrads zur Regeneration eingeleitet wird;
c) wenn die Isttemperatur des Abgases niedriger ist als die Normaltemperatur und/oder sinkt, das Erhöhen der Temperatur durch Anwenden eines höheren Bedingungsgrads zur Regeneration verzögert wird.

2. Verfahren nach Anspruch 1, bei dem die den Bedarf an einer Filterregeneration anzeigenden Bedingungen durch den Druckunterschied am Abgasfilter definiert werden.

3. Verfahren nach Anspruch 1 oder 2, bei dem die den Bedarf an einer Filterregeneration anzeigenden Bedingungen durch die geschätzte Belastung des Abgasfilters definiert werden.

4. Verfahren nach einem der Ansprüche 1 bis 3, bei dem die Entscheidung zur Einleitung des Erhöhens der Temperatur des Abgases mit Hilfe von Fuzzy-Logik-Berechnungen auf Grundlage von Mitgliedschaftsfunktionen für die den Bedarf an einer Filterregeneration anzeigende Bedingung und für die Isttemperatur des Abgases getroffen wird.

5. System zur Regeneration eines im Abgasrohr eines Verbrennungsmotors angeordneten Abgasfilters, das Folgendes umfasst:
a) Mittel zur Ermittlung der den Bedarf an einer Filterregeneration anzeigenden Bedingungen;
b) Mittel zur Erhöhung der Temperatur des Abgases;
c) Mittel zur Ermittlung der Isttemperatur des Abgases; und
d) eine zur Durchführung eines Verfahrens nach einem der Ansprüche 1 bis 4 ausgeführte Steuerung.

6. System nach Anspruch 5, bei dem es sich bei dem Verbrennungsmotor um einen Dieselmotor und bei dem Abgasfilter um einen Dieselrußfilter handelt.

7. System nach Anspruch 5 oder 6, bei dem die Mittel zur Ermittlung der den Bedarf an einer Filterregeneration anzeigenden Bedingungen dem Abgasfilter vor- und nachgeschaltete Drucksensoren umfassen.

8. System nach einem der Ansprüche 5 bis 7, bei dem die Mittel zur Ermittlung der Isttemperatur des Abgases einen im Abgasrohr des Verbrennungsmotors angeordneten Temperatursensor umfassen.

9. System nach einem der Ansprüche 5 bis 8, bei dem es sich bei der Steuerung um einen programmierbaren Mikroprozessor handelt.

## Revendications

1. Procédé de régénération d'un filtre d'échappement situé dans le tuyau d'échappement d'un moteur à combustion interne, comprenant l'étape consistant à faire monter la température du gaz d'échappement au-dessus d'un seuil de température donné si des conditions indiquant la nécessité de procéder à une régénération du filtre sont remplies, dans lequel :
a) la montée de la température est uniquement amorcée selon lesdites conditions si la température réelle du gaz d'échappement correspond à une température prédéterminée dite "normale" ;
b) si la température réelle du gaz d'échappement est supérieure à la température normale et/ou est en train d'augmenter, la montée de la température est amorcée plus tôt en appliquant une condition de régénération plus faible ;
c) si la température réelle du gaz d'échappement est inférieure à la température normale et/ou est en train de baisser, la montée de la température est amorcée plus tard en appliquant une condition de régénération plus forte.

2. Procédé selon la revendication 1, dans lequel les conditions indiquant la nécessité de procéder à une régénération du filtre sont définies par la différence de pression à travers le filtre d'échappement.

3. Procédé selon la revendication 1 ou 2, dans lequel les conditions indiquant la nécessité de procéder à une régénération du filtre sont définies par la charge estimée du filtre d'échappement.

4. Procédé selon l'une quelconque des revendications 1 à 3, dans lequel la décision d'amorcer l'augmentation de la température du gaz d'échappement est prise avec l'aide de calculs de logique floue basés sur des fonctions d'appartenance relatives à la condition indiquant la nécessité de procéder à une régénération du filtre et à la température réelle du gaz d'échappement.

5. Système de régénération d'un filtre d'échappement situé dans le tuyau d'échappement d'un moteur à combustion interne, comprenant :
a) des moyens pour déterminer des conditions indiquant la nécessité de procéder à une régénération du filtre ;
b) des moyens pour augmenter la température du gaz d'échappement ;
c) des moyens pour déterminer la température réelle du gaz d'échappement ; et
d) un dispositif de commande adapté pour exécuter un procédé selon l'une quelconque des revendications 1 à 4.

6. Système selon la revendication 5, dans lequel le moteur à combustion interne est un moteur diesel, et le filtre d'échappement est un filtre à particules diesel.

7. Système selon la revendication 5 ou 6, dans lequel les moyens pour déterminer les conditions indiquant la nécessité de procéder à une régénération du filtre comprennent des capteurs de pression disposés en amont et en aval du filtre d'échappement.

8. Système selon l'une quelconque des revendications 5 à 7, dans lequel les moyens pour déterminer la température réelle du gaz d'échappement comprennent un capteur de température disposé dans le tuyau d'échappement du moteur à combustion interne.

9. Système selon l'une quelconque des revendications 5 à 8, dans lequel le dispositif de commande est un micro-processeur programmable.
